# EUROPÄISCHE PATENTSCHRIFT

(11) **EP 2 940 624 B1**
(45) Veröffentlichungstag und Bekanntmachung des Hinweises auf die Patenterteilung: **28.04.2021**
(21) Anmeldenummer: 14450018.8
(22) Anmeldetag: 30.04.2014
(51) Int. Cl.: G06K 9/00, G06T 7/246, G06T 7/55

(54) **Dreidimensionales virtuelles Modell einer Umgebung für Anwendungen zur Positionsbestimmung**
Three-dimensional virtual model of an environment for applications for determining positions
Modèle virtuel tridimensionnel d'un environnement pour applications destinées à la détermination de position

(43) Veröffentlichungstag der Anmeldung: 04.11.2015
(73) Patentinhaber: INS Insider Navigation Systems GmbH, 1040 Wien (AT)
(72) Erfinder: Kaufmann, Hannes, 1200 Wien (AT); Mossel, Annette, 1070 Wien (AT)
(74) Vertreter: Keschmann, Marc

(56) Entgegenhaltungen:
- Card Cem: "insider navigation - Destination tomorrow. Today!", , 22. April 2014 (2014-04-22), XP054975558, Gefunden im Internet: URL:http://youtu.be/aMBVLUMxmiQ [gefunden am 2014-10-20]
- Card Cem: "insider navigation app - first live demo", , 22. April 2014 (2014-04-22), XP054975559, Gefunden im Internet: URL:http://youtu.be/WG0pVSia1js [gefunden am 2014-10-20]
- LU GUOYU ET AL: "Image-based indoor localization system based on 3D SfM model", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9025, 23 December 2013 (2013-12-23), pages 90250H-90250H, XP060035853, DOI: 10.1117/12.2038582 ISBN: 978-1-62841-730-2
- RADU TIMOFTE ET AL: "Multi-view traffic sign detection, recognition, and 3D localisation", APPLICATIONS OF COMPUTER VISION (WACV), 2009 WORKSHOP ON, IEEE, PISCATAWAY, NJ, USA, 7 December 2009 (2009-12-07), pages 1-8, XP031622341, ISBN: 978-1-4244-5497-6

## Beschreibung

Die Erfindung betrifft ein Verfahren zum Erstellen eines dreidimensionalen virtuellen Modells einer Umgebung für Anwendungen zur Positionsbestimmung.

Die Erfindung betrifft weiters ein Verfahren zur Positionsbestimmung eines Benutzers in einer realen Umgebung mittels eines vom Benutzer getragenen mobilen Endgeräts unter Verwendung eines gespeicherten virtuellen Modells der Umgebung.

Die Erfindung betrifft weiters eine Vorrichtung zur Positionsbestimmung eines Benutzers in einer realen Umgebung sowie ein entsprechendes Computerprogrammprodukt.

Die Positionsbestimmung eines Benutzers eines mobilen Endgeräts im Freien ist mit herkömmlichen Methoden problemlos möglich und ist für Echtzeit-Anwendungen standardisiert. Eines der bekanntesten und meistverbreiteten Systeme ist das satellitengestützte Global Positioning System (GPS), das auch in vielen Smartphones und Tabletcomputern verwendet wird.

Moderne elektronische Systeme (funkgestützt, optisch oder akustisch) ermöglichen auch die Ortsbestimmung im Inneren von Gebäuden. Der für eine hinreichend genaue Positionsbestimmung erforderliche Hardware- bzw. Rechenaufwand ist jedoch beträchtlich und übersteigt gegenwärtige Kapazitäten von Smartphones. Herkömmliche Verfahren zur Positionsbestimmung in einem geschlossenen Raum sind zumeist als optische Systeme ausgebildet, mit denen die Position und/oder Orientierung von Objekten in der Umgebung bestimmt werden kann. Durch einen Abgleich des optisch erfassten Objekts mit einem zuvor erfassten dreidimensionalen Modell der betreffenden Umgebung kann die Position des erfassten Objekts im dreidimensionalen Raum ermittelt und in weiterer Folge die Position des Benutzers relativ zu diesem Objekt bestimmt werden. Zur Erkennung von Objekten in der Umgebung kommen Systeme mit unterschiedlichsten physikalischen Wirkprinzipien zum Einsatz. Gängig sind sogenannte optische Tracking-Systeme, die durch verschiedene Verfahren der computergestützten Bildverarbeitung die Position von im Erfassungsbereich einer Kamera befindlichen Objekten und/oder die Position der Kamera über die Erkennung der Objekte bestimmen.

Aus der Veröffentlichung "LU GUOYU et al; Image-based indoor localization system based on 3D SfM model; Proceedings Volume 9025, Intelligent Robots and Computer Vision XXXI: Algorithms an Techniques, 3. Februar 2014, XP060035853, DOI: 10.1117/12.2038582; ISBN: 978-1-62841-730-2" ist ein bildbasiertes Trackingsystem für Innenräume bekannt.

Um die Verarbeitungsgeschwindigkeit zu erhöhen und den Rechenbedarf zu verringern, ist es bekannt, den Trackingraum mit kontrastreichen, leicht zu erkennenden Markierungen (sog. Markern) auszustatten. Dieser Ansatz hat allerdings den Nachteil, dass der Trackingraum ausgestattet werden muss und das Tracking nur im ausgestatteten Bereich möglich ist. Optische Trackingverfahren mit dieser Methode werden allgemein als markerbasierte Trackingverfahren bezeichnet.

Es sind aber auch markerlose Tracking-Systeme bekannt geworden, bei denen eine Vereinfachung der Komplexität meist dadurch gelingt, dass zusätzliche Sensoren, zum Beispiel Beschleunigungssensoren, zum Einsatz gelangen, welche den Suchraum der Bildverarbeitungsalgorithmen einschränken.

Die Eingangsinformation des Systems ist bei optischen Tracking-Systemen ein zweidimensionales Kamerabild, auf dessen Grundlage die Position und Orientierung eines oder mehrerer Objekte relativ zur Kamera ermittelt werden. Position und Orientierung können beispielhafterweise durch eine Transformationsmatrix beschrieben werden. Zur Bestimmung der Transformationsmatrix sind unterschiedlichste Verfahren bekannt. Manche Verfahren erkennen Features, beispielsweise Kanten oder Ecken, von realen Objekten und gleichen diese mit vorher hinterlegten digitalen Modellen der Realität ab.

Die vorliegende Erfindung zielt darauf ab, ein System zu schaffen, mit dem Personen ihre Position zentimetergenau mit Hilfe eines mobilen Endgeräts in Innenräumen bestimmen können. Die hierfür erforderliche Rechenleistung des Endgeräts und die Anforderung an die Sensorausstattung sollen so gering sein, dass die Positionsbestimmung ohne weiteres mit Hilfe handelsüblicher Smartphones und Tabletcomputer möglich ist. Die Positionsbestimmung soll Anwendungen zur Navigation oder Orientierung z.B. auf Flughäfen, in Einkaufszentren, in Spitälern, in öffentlichen Gebäuden, etc. ermöglichen. Die Position und Orientierung im Raum soll auch für Augmented Reality Anwendungen nutzbar sein, um virtuelle Inhalte an den real korrekten Plätzen anzuzeigen z.B. virtuelle Werbeplakate über realen Geschäften, Gutscheine vor Eingängen von Geschäften, Navigationspfeile zum Ziel etc.

Die Erfindung zielt weiters darauf ab, ein Verfahren anzugeben, mit dem ein für die Positionsbestimmung geeignetes dreidimensionales virtuelles Modell der betreffenden Umgebung in einfacher Weise erstellt werden kann.

Zur Lösung der oben genannten Aufgabe sieht die Erfindung ein Verfahren zur Positionsbestimmung eines Benutzers in einer realen Umgebung mittels eines vom Benutzer getragenen mobilen Endgeräts unter Verwendung eines gespeicherten virtuellen Modells der Umgebung vor, dadurch gekennzeichnet, dass das gespeicherte Modell ein dreidimensionales Modell der Umgebung und wenigstens ein zweidimensionales Modell wenigstens eines Teilbereichs der Umgebung umfasst, dem eine 3D-Position innerhalb des dreidimensionalen Modells der Umgebung zugeordnet ist, dass mit einem optischen Sensor des Endgeräts ein Bereich der realen Umgebung aufgenommen wird, um wenigstens eine zweidimensionale Abbildung des Bereichs zu erhalten, dass die wenigstens eine zweidimensionale Abbildung einer elektronischen Bildverarbeitung im Endgerät unterworfen wird, welche einen ersten Algorithmus zur Feature Extraktion und einen zweiten Algorithmus zur Feature Extraktion umfasst, wobei der erste Algorithmus zur Feature Extraktion durchgeführt wird, um ein dreidimensionales virtuelles Modell des Bereichs zu erhalten, und der zweite Algorithmus zur Feature Extraktion durchgeführt wird, um ein zweidimensionales virtuelles Modell des Bereichs zu erhalten, dass das dreidimensionale virtuelle Modell mit dem gespeicherten dreidimensionalen Modell verglichen und das zweidimensionale virtuelle Modell mit dem gespeicherten zweidimensionalen Modell verglichen wird und bei Erkennen einer Übereinstimmung die Position des Benutzers innerhalb des gespeicherten dreidimensionalen Modells erhalten wird, wobei die Auflösung der Feature Extraktion des ersten Algorithmus geringer ist als die des zweiten Algorithmus.

Bevorzugte Weiterbildungen der Erfindung ergeben sich aus den jeweiligen Unteransprüchen.

Weiters wird ein nicht beanspruchtes Verfahren zum Erstellen eines dreidimensionalen virtuellen Modells einer Umgebung für Anwendungen zur Positionsbestimmung beschrieben, umfassend das Generieren einer oder mehrerer zweidimensionaler Abbildungen einer realen Umgebung mittels eines optischen Aufnahmegeräts, Transformieren der zweidimensionalen Abbildung in ein dreidimensionales Modell der realen Umgebung mittels eines ersten Algorithmus zur Feature Extraktion, das Generieren einer zweidimensionalen Abbildung wenigstens eines Teilbereichs der realen Umgebung mittels eines optischen Aufnahmegeräts, Transformieren der zweidimensionalen Abbildung in ein zweidimensionales Modell des Teilbereichs der realen Umgebung mittels eines zweiten Algorithmus zur Feature Extraktion, wobei der erste und der zweite Algorithmus zur Feature Extraktion voneinander verschieden sind, und wobei dem zweidimensionalen Modell des wenigstens eines Teilbereichs eine 3D-Position innerhalb des dreidimensionalen Modells der Umgebung zugeordnet wird.

Die Erfindung schlägt somit ein hybrides Verfahren vor, bei dem zwei verschiedene optische Trackingverfahren miteinander kombiniert werden. Das erste Trackingverfahren beruht auf einem ersten Algorithmus zur Feature Extraktion, der auf die Bilder der gesamten Umgebung angewendet wird, wohingegen das zweite Trackingverfahren auf einem zweiten Algorithmus zur Feature Extraktion beruht, der nur auf ausgewählte Teilbereiche der Umgebung angewendet wird. Die Teilbereiche werden bei der Erstellung des dreidimensionalen virtuellen Modells der Umgebung vorzugsweise manuell definiert und sind vorzugsweise räumlich genau begrenzte Objekte oder Aufschriften, wie z.B. Hinweisschilder, Unternehmenslogos etc., die hinsichtlich des zur Anwendung gelangenden Algorithmus zur Feature Extraktion eine gute Wiedererkennbarkeit aufweisen. So können vorzugsweise solche Teilbereiche der Umgebung selektiert werden, die deutliche bzw. charakteristische Kontrastunterschiede aufweisen, sodass eine Wiedererkennung auch unter Störungseinflüssen, wie z.B. wechselnden Lichtverhältnissen, gewährleistet ist.

Mit dem erfindungsgemäßen Tracking-Verfahren kann nicht nur die absolute Position des Benutzers bzw. des Endgeräts im 3D-Raum ermittelt werden, sondern auch die Orientierung des Benutzers im Raum, also Gier-, Nick- und Roll-Winkel. Dadurch kann zusätzlich zur genauen Position des Benutzers auch dessen Blickrichtung erkannt werden.

Der erste und der zweite Algorithmus zur Feature Extraktion können sich vorzugsweise dahingehend voneinander unterscheiden, dass der Rechenaufwand, die Qualität und/oder die Auflösung der Feature Extraktion des ersten Algorithmus und des zweiten Algorithmus voneinander verschieden ist, wobei vorzugsweise der Rechenaufwand und/oder die Qualität und erfindungsgemäß die Auflösung der Feature Extraktion des ersten Algorithmus geringer ist als beim zweiten Algorithmus. Dadurch kann der Hard- und/oder Softwareaufwand für die Durchführung des ersten Algorithmus gering gehalten werden, woraus bestimmte Ungenauigkeiten bei der Erkennung der Umgebung und beim Abgleich mit dem dreidimensionalen virtuellen Modell der Umgebung resultieren können. Dies wird im Rahmen der Erfindung jedoch durch den zweiten Algorithmus kompensiert, der eine bessere und robustere Erkennung der Umgebung gewährleistet. Dadurch, dass die Anwendung des zweiten Algorithmus auf die Abbildung von ausgewählten Teilbereichen der Umgebung beschränkt ist, bleibt der Rechenaufwand insgesamt innerhalb eines für mobile Endgeräte akzeptablen Bereichs.

Der hybride Charakter des erfindungsgemäßen Tracking-Systems äußert sich auch darin, dass der erste Algorithmus zur Feature Extraktion so durchgeführt wird, dass die zweidimensionalen Abbildungen der Umgebung in ein dreidimensionales Modell transformiert werden, wohingegen der zweite Algorithmus zur Feature Extraktion die zweidimensionale Abbildung in ein zweidimensionales Modell transformiert. Für die Durchführung des zweiten Algorithmus ist ein einziges zweidimensionales Bild ausreichend, wohingegen für die Generierung eines dreidimensionalen Modells mit Hilfe des ersten Algorithmus eine Mehrzahl von Bildern bzw. ein bewegtes Bild erforderlich ist, um die dritte Dimension errechnen zu können.

Unter einer Feature Extraktion bzw. Merkmalsextraktion versteht man allgemein ein Verfahren zur Bildverarbeitung von digitalen Bildern, bei denen aus den Bildern eine bestimmte Anzahl von Merkmalen automatisch extrahiert wird. Mittels eines Algorithmus wird in den Bildern nach markanten Merkmalen gesucht. Die gewählten Merkmale sollten dabei möglichst über das gesamte Bild verteilt liegen und sich nicht auf bestimmte Regionen konzentrieren.

Bevorzugt kann der erste und/oder der zweite Algorithmus zur Feature Extraktion im Rahmen der Erfindung eine Eckpunktdetektion und/oder eine Kantendetektion umfassen. Algorithmen zur Eckpunktdetektion sind dem Fachmann bekannt. Sehr häufig wir dazu der FAST Eckpunkt Detektor (FAST - Features from accelerated segment test) verwendet. Algorithmen zur Kantendetektion sind dem Fachmann ebenfalls bekannt. Linien oder Kanten können im Bild als Konturen von Regionen oder als Linien selbst vorhanden sein. Sie können durch die Paare ihrer Endpunkte oder ihren Mittelpunkt repräsentiert und mittels Kantendetektion extrahiert werden. Punkte können im Bild als Schnittpunkte von Linien oder Ecken von Konturen gegeben sein. Sie können durch Eckendetektoren extrahiert werden.

Für den Aufbau des dreidimensionalen virtuellen Modells der realen Umgebung können Algorithmen verwendet werden, wie sie z.B. in SLAM-Verfahren (Simultaneous Localization and Mapping) zum Einsatz gelangen. Mit solchen Verfahren ist es möglich gleichzeitig eine Karte seiner Umgebung zu erstellen und seine Position innerhalb dieser Karte abzuschätzen.

Der erste Algorithmus zur Feature Extraktion ist hierbei so beschaffen, dass er zusätzlich zur eigentlichen Feature Extraktion in der Lage ist, den aus den zweidimensionalen Abbildungen extrahierten Merkmalen eine dritte Dimension zuzuordnen, d.h. die Merkmale im dreidimensionalen Raum zu positionieren, um auf diese Weise ein dreidimensionales virtuelles Modell der Umgebung zu erstellen. Die dritte Dimension kann hierbei bevorzugt durch Vergleich der Position von extrahierten Merkmalen in einer Mehrzahl von aufeinanderfolgend aufgenommenen Bildern ermittelt werden, wobei dem Fachmann entsprechende Rechenverfahren bekannt sind. Besonders bevorzugt sind alle monoskope (d.h. nur eine Kamera benötigende) Algorithmen, insbesondere SLAM Algorithmen, die 3D-Information aus einer Menge von 2D-Bildern extrahieren. Die Errechnung der dritten Dimension kann hierbei durch zusätzliche Sensordaten erleichtert werden, z.B. Daten, welche die Bewegungsrichtung des optischen Aufnahmegeräts während der Bildaufnahme repräsentieren.

Das nicht beanspruchte Verfahren zum Erstellen eines dreidimensionalen virtuellen Modells einer Umgebung wird in diesem Zusammenhang bevorzugt so durchgeführt, dass das Generieren von zweidimensionalen Abbildungen einer realen Umgebung das Erstellen wenigstens einer Videosequenz der realen Umgebung umfasst. Bevorzugt wird eine Mehrzahl von Videosequenzen erstellt, die gesondert voneinander mittels des ersten Algorithmus jeweils in ein dreidimensionales Modell transformiert werden, wobei die dreidimensionalen Modelle zu einem Gesamtmodell der Umgebung zusammengesetzt werden.

Gemäß einer weiteren bevorzugten Weiterbildung des nicht beanspruchten Verfahrens ist vorgesehen, dass das Transformieren der zweidimensionalen Abbildung der realen Umgebung und/oder des Teilbereichs der Umgebung in ein zwei- bzw. dreidimensionales Modell das Erstellen einer Punktwolke umfasst. Unter einer Punktwolke wird hierbei eine Liste von Punkten verstanden, deren Position im dreidimensionalen Raum z.B. durch kartesische 3D-Koordinaten angegeben ist. Jeder der Punkte repräsentiert beispielswiese ein im Rahmen der Feature Extraktion aus der zweidimensionalen Abbildung extrahiertes Merkmal, wie z.B. eine Linie, eine Kante oder eine Ecke. Die Punktwolke kann hierbei das dreidimensionale virtuelle Modell der Umgebung darstellen.

Bei der Erstellung des dreidimensionalen Modells kann in bevorzugter Weise so vorgegangen werden, dass das dreidimensionale Modell der Umgebung editiert wird, wobei vorzugsweise Punkte der Punktewolke gelöscht werden. Auf diese Weise können bestimmte Bereiche des dreidimensionalen Modells nachträglich geändert werden, beispielsweise um veränderliche Objekte ganz oder teilweise zu eliminieren, die sich im Rahmen der Positionserkennung störend auswirken würden. Dabei handelt es sich z.B. um Objekte, deren örtliche Position oder äußere Erscheinungsform veränderlich ist, wie z.B. Gepäckstransportwägen in einer Flughafenhalle, Anzeigetafeln mit veränderlicher Anzeige, saisonale Geschäftsverzierungen und dgl.

Das Verfahren zur Positionsbestimmung gemäß der Erfindung wird vorzugsweise unter Zugrundelegung eines gespeicherten virtuellen dreidimensionalen Modells der Umgebung durchgeführt, wie es mit dem nicht beanspruchten Verfahren zum Erstellen eines dreidimensionalen virtuellen Modells erhalten wurde. Das gespeicherte virtuelle dreidimensionale Modell umfasst daher in räumlichen Teilbereichen Modellbereiche, die mit einem anderen Algorithmus zur Feature Extraktion ermittelt wurden als der Rest des Modells. Insbesondere umfasst das gespeicherte Modell ein dreidimensionales Modell der Umgebung und wenigstens ein zweidimensionales Modell wenigstens eines Teilbereichs der Umgebung, dem eine 3D-Position innerhalb des dreidimensionalen Modells der Umgebung zugeordnet ist. Entsprechend dem hybriden Charakter des zugrundeliegenden gespeicherten Modells der Umgebung erfolgt auch die Positionsbestimmung mit einem hybriden Tracking-Verfahren, bei dem zwei unterschiedliche Algorithmen zur Feature Extraktion zur Anwendung gelangen. Der Anwender nimmt dabei mit seinem mobilen Endgerät ein digitales zweidimensionales Bild oder eine Bildersequenz der Umgebung auf, welches bzw. welche einer Bildverarbeitung mittels des ersten und des zweiten Algorithmus zur Feature Extraktion unterworfen werden. Erfindungsgemäß wird in diesem Zusammenhang so vorgegangen, dass die elektronische Bildverarbeitung mittels des ersten Algorithmus zur Feature Extraktion durchgeführt wird, um ein dreidimensionales virtuelles Modell des aufgenommenen Bereichs zu erhalten, und die elektronische Bildverarbeitung mittels des zweiten Algorithmus zur Feature Extraktion durchgeführt wird, um ein zweidimensionales virtuelles Modell des Bereichs zu erhalten, wobei das dreidimensionale virtuelle Modell mit dem gespeicherten dreidimensionalen Modell verglichen und das zweidimensionale virtuelle Modell mit dem gespeicherten zweidimensionalen Modell verglichen wird.

Wenn als Ergebnis der Durchführung des ersten und/oder zweiten Algorithmus eine Punktwolke vorliegt, wird bevorzugt so vorgegangen, dass die vom Benutzer mittels des Endgeräts aufgenommenen Abbildungen des erfassten Bereichs der realen Umgebung mittels des entsprechenden Algorithmus in eine Punktwolke transformiert werden, die in der Folge mit der das gespeicherte dreidimensionale Modell der Umgebung darstellenden Punktewolke abgeglichen wird, um bei einer Übereinstimmung die Position innerhalb des dreidimensionalen Modells bzw. der realen Umgebung zu ermitteln.

Auf Grund des hybriden Charakters des erfindungsgemäßen Verfahrens, ist es vorteilhaft, wenn jedes der aufgenommenen Bilder der Umgebung sowohl dem ersten Algorithmus als auch dem zweiten Algorithmus zur Feature Extraktion unterworfen wird. Dies kann entweder in zwei parallel ablaufenden Rechenprozessen erfolgen oder nacheinander. Im letzten Fall wechselt der Rechenprozess ständig zwischen der Merkmalsextraktion mittels des ersten und mittels des zweiten Algorithmus hin und her. Das Verfahren wird in diesem Zusammenhang bevorzugt so ausgeführt, dass das Aufnehmen des Bereichs der realen Umgebung durchgeführt wird, um wenigstens eine Videosequenz zu erhalten, wobei jedes der aufeinanderfolgenden Einzelbilder der Videosequenz hintereinander einer Bildverarbeitung mittels des ersten Algorithmus und einer Bildverarbeitung mittels des zweiten Algorithmus unterworfen wird.

Die Positionsbestimmung erfolgt bevorzugt so, dass primär das Ergebnis der Bildverarbeitung mittels des zweiten Algorithmus zur Feature Extraktion herangezogen wird, um durch Vergleich des so erhaltenen zweidimensionalen Modells mit dem gespeicherten zweidimensionalen Modell die Position zu bestimmen. Nur wenn dieser Vergleich kein Ergebnis liefert, wird das Ergebnis der Bildverarbeitung mittels des ersten Algorithmus zur Feature Extraktion zur Positionsbestimmung herangezogen.

Bevorzugt wird ein zweistufiger Prozess angewendet. Als erste Stufe des Trackingalgorithmus werden somit zweidimensionale, planare visuelle Deskriptoren, wie beispielsweise vorhandene Logos oder Schilder, zur Bestimmung von Position und Orientierung des mobilen Endgeräts herangezogen. Diese können mit existierender, für mobile Plattformen optimierter Technologie (z.B. Qualcomm Vuforia, Metaio Mobile SDK) robust und mit geringer Latenz getrackt werden (zweiter Algorithmus zur Feature Extraktion). Zusätzlich wird ein 3D Trackingalgorithmus verwendet (erster Algorithmus zur Feature Extraktion), der markante visuelle 3D-Merkmale (Ecken und Kanten an Decken und Wänden, Säulen, Vorsprünge) auswertet und speichert. Falls kein markanter planarer Marker im aktuellen Kamerabild erkannt wird, wird vom hybriden Trackingalgorithmus nur der 3D Trackingalgorithmus verwendet. Falls ein planarer Marker zu sehen ist, wird die Position mit beiden Methoden bestimmt und daraus eine endgültige Position berechnet. Durch die Kombination beider Verfahren entstehen Redundanzen, die eine robustere Positionsbestimmung ermöglichen.

Zur Laufzeit können die in dem gespeicherten dreidimensionalen Modell hinterlegten Basis-Features bei schlechter Trackingqualität mit neuen Features aus dem aktuellen Kamerabild des mobilen Endgeräts ergänzt werden, um die Robustheit des Algorithmus zu verbessern.

Um das Tracking auf Basis von 3D-Features und von zweidimensionalen, planaren visuellen Deskriptoren robuster gegen visuelle Störeinflüsse zu gestalten, können die ermittelten Positions- und Lagedaten mit den im mobilen Endgerät integrierten inertialen Messeinheiten (Messwerte von Beschleunigungssensoren, Gyrosensoren, Kompass etc.) fusioniert werden.

Für den Fall, dass kein Tracking auf Basis von visuellen Deskriptoren möglich ist, sieht der hybride Trackingalgorithmus als optionale letzte Stufe das Tracking auf Basis der inertialen Messeinheiten vor. Diese Absicherung gegen einen Trackingausfall ist für einen kurzen Zeitraum gedacht, bis wieder visuelle Deskriptoren zum Tracking herangezogen werden können.

Die erfindungsgemäße Positionsbestimmung in Innenräumen, wie z.B. Flughäfen, Einkaufszentren, Spitälern etc. kann in vorteilhafter Weise für Augmented Reality Anwendungen genutzt werden. Dadurch können beispielsweise virtuelle Inhalte am elektronischen Bild an den korrekten Plätzen angezeigt werden, z.B. virtuelle Werbeplakate über realen Geschäften, Gutscheine vor Eingängen von Geschäften, Navigationspfeile zum Ziel etc. Die Erfindung ist in diesem Zusammenhang bevorzugt derart weitergebildet, dass der aufgenommene Bereich der realen Umgebung auf einer elektronischen Anzeigeeinheit des Endgeräts in Echtzeit angezeigt wird und in Abhängigkeit von der ermittelten Position des Benutzers wenigstens ein virtuelles Objekt in die Anzeige der realen Umgebung eingeblendet wird.

Gemäß einem weiteren Aspekt betrifft die Erfindung eine Vorrichtung zur Positionsbestimmung eines Benutzers in einer realen Umgebung, insbesondere zur Durchführung der zuvor beschriebenen Positionsbestimmung, umfassend ein vom Benutzer tragbares mobiles Endgerät mit einem optischen Sensor zur Erzeugung einer zweidimensionalen Abbildung eines Bereichs der realen Umgebung, mit einem Datenspeicher zum Speichern eines virtuellen Modells der Umgebung, wobei das gespeicherte Modell ein dreidimensionales Modell der Umgebung und wenigstens ein zweidimensionales Modell wenigstens eines Teilbereichs der Umgebung umfasst, dem eine 3D-Position innerhalb des dreidimensionalen Modells der Umgebung zugeordnet ist, und mit einem

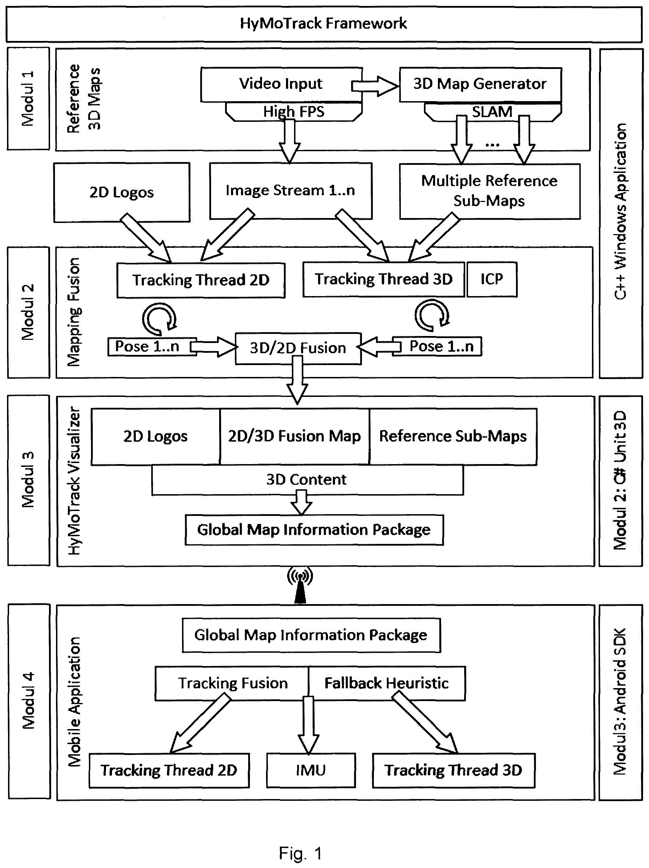

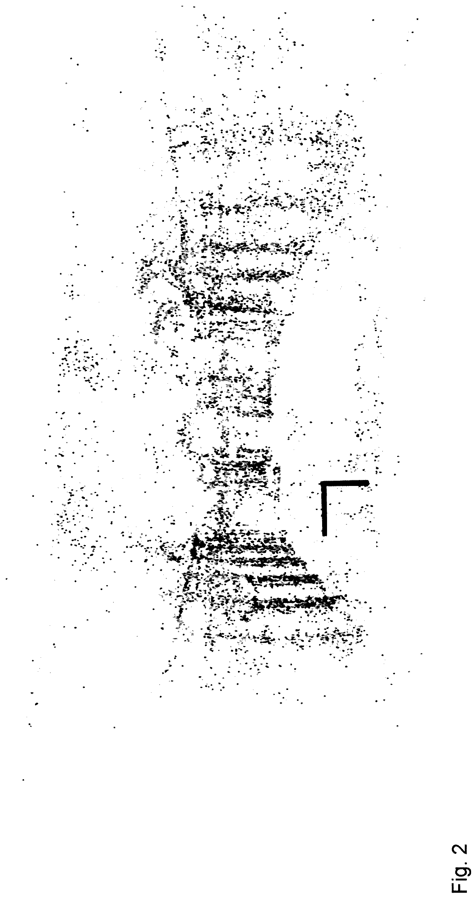

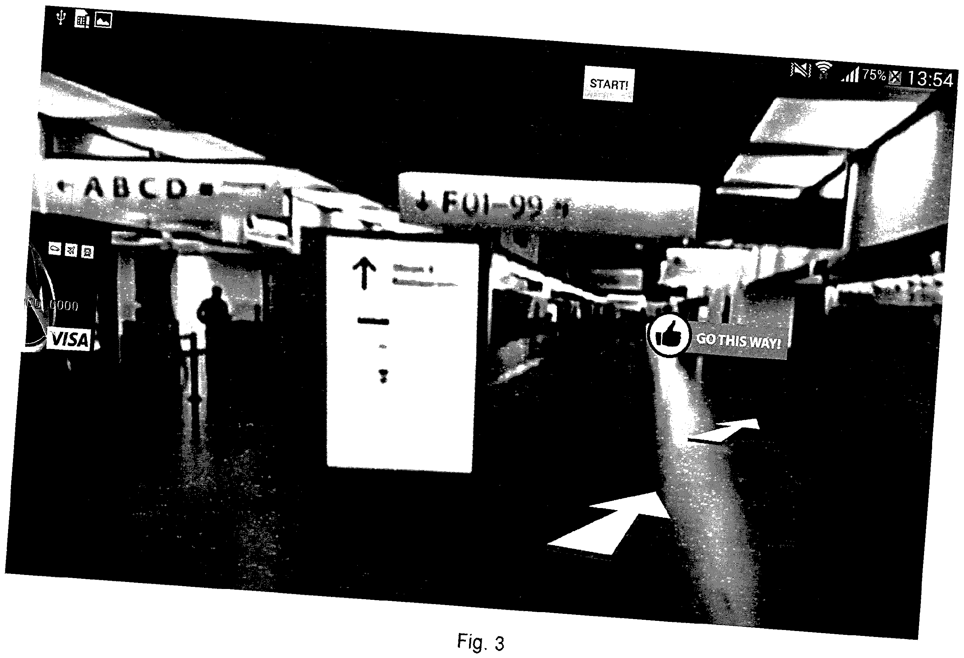

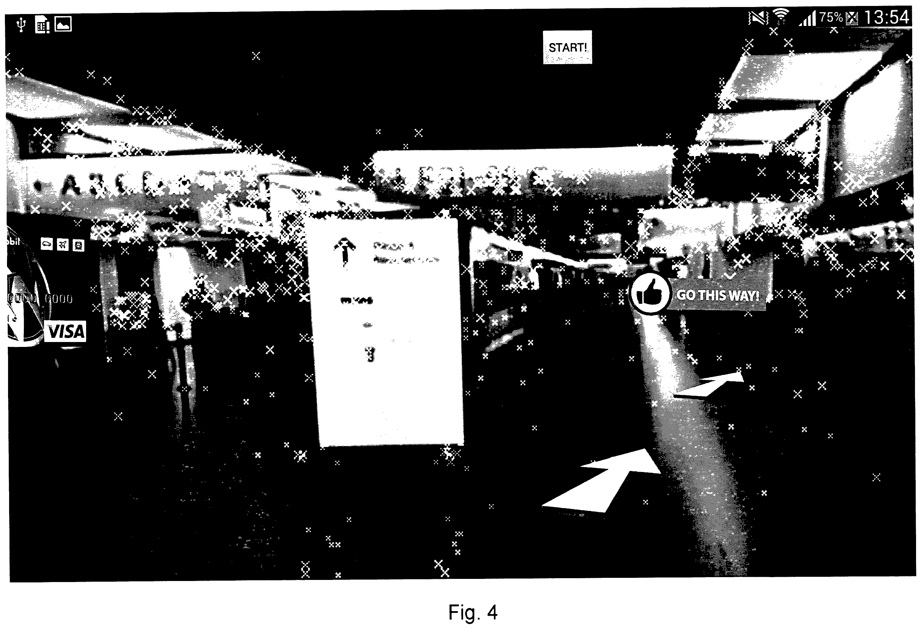

Datenverarbeitungssystem, wobei in dem Datenverarbeitungssystem ein Verfahren implementiert ist, das geeignet ist, um die wenigstens eine zweidimensionale Abbildung einer elektronischen Bildverarbeitung zu unterwerfen, welche einen ersten Algorithmus zur Feature Extraktion umfasst, um ein dreidimensionales virtuelles Modell des Bereichs zu erhalten, und einen zweiten Algorithmus zur Feature Extraktion umfasst, um ein zweidimensionales virtuelles Modell des Bereichs zu erhalten, um das zweidimensionale virtuelle Modell mit dem gespeicherten zweidimensionalen Modell zu vergleichen und das dreidimensionale virtuelle Modell mit dem gespeicherten dreidimensionalen Modell zu vergleichen und um bei Erkennen einer Übereinstimmung die Position des Benutzers innerhalb des gespeicherten dreidimensionalen Modells zu erhalten, wobei die Auflösung der Feature Extraktion des ersten Algorithmus geringer ist als die des zweiten Algorithmus. Bevorzugte Weiterbildungen der Vorrichtung sind in den Unteransprüchen definiert und entsprechen im Wesentlichen den im Zusammenhang mit den Verfahren gemäß dem zweiten Aspekt der Erfindung beschriebenen Verfahrensausprägungen. Schließlich betrifft die Erfindung gemäß einem weiteren Aspekt ein Computerprogrammprodukt, welches Softwarecodeabschnitte aufweist, welche in einem erfindungsgemäßen Verfahren geeignet sind, um die wenigstens eine zweidimensionale Abbildung einer elektronischen Bildverarbeitung im Endgerät zu unterwerfen, welche einen ersten Algorithmus zur Feature Extraktion umfasst, um ein dreidimensionales virtuelles Modell des Bereichs zu erhalten, und einen zweiten Algorithmus zur Feature Extraktion umfasst, um ein zweidimensionales virtuelles Modell des aufgenommenen Bereichs zu erhalten, um das zweidimensionale virtuelle Modell mit dem gespeicherten zweidimensionalen Modell zu vergleichen und das dreidimensionale virtuelle Modell mit dem gespeicherten dreidimensionalen Modell zu vergleichen und um bei Erkennen einer Übereinstimmung die Position des Benutzers innerhalb des gespeicherten dreidimensionalen Modells zu erhalten, wobei die Auflösung der Feature Extraktion des ersten Algorithmus geringer ist als die des zweiten Algorithmus. Die Erfindung wird nachfolgend anhand eines in der Zeichnung schematisch dargestellten Ausführungsbeispiels näher erläutert. In dieser zeigen Fig. 1 ein Arbeitsablaufdiagramm einer Software-Implementation der Erfindung, Fig. 2 die räumliche Darstellung einer beispielhaften Punktwolke und Fig. 3 und 4 eine Augmented Reality Anwendung der Erfindung, nämlich die Einblendung eines Navigationspfeils in der Darstellung der Umgebung auf einer Anzeigevorrichtung des Endgeräts.

Das Arbeitsablaufdiagramm gemäß Fig. 1 umfasst im vorliegenden Ausführungsbeispiel vier Module. Die Module 1 bis 3 symbolisieren die Erstellung eines dreidimensionalen Modells einer Umgebung und das Modul 4 symbolisiert die Positionsbestimmung (Tracking) eines Benutzers mittels einer Applikation auf einem mobilen Endgerät.

Im Modul 1 werden mehrere aufgezeichnete Videoclips (Video Input) eines Innenraumes dem ersten Algorithmus (3D Map Generator) zugeführt, wobei der erste Algorithmus eine Feature Extraktion umfasst und als SLAM-Algorithmus ausgebildet sein oder diesen umfassen kann. Mit dem ersten Algorithmus wird eine 3D Punktwolke als virtuelles Modell des Innenraumes erzeugt. Dabei werden abschnittsweise einzelne Videosequenzen herangezogen, um mehrere, jeweils örtlich begrenzte Untermodelle als 3D Punktwolken (Reference Sub-Maps) zu generieren. Zusätzlich können aus dem Video zweidimensionale Bilder (2D Logos), z.B. Schilder, Logos etc. automatisch extrahiert werden oder es werden vorhandene Bilddaten verwendet.

Im Modul 2 werden die einzelnen 3D Untermodelle (Multiple Reference Sub-Maps) mittels eines Iterative Closest Point (ICP) Algorithmus automatisiert zu einem Gesamtmodell zusammengefügt. Zusätzlich werden die vorhandenen 2D-Bilder (2D Logos) verortet, d.h. an korrekter Position in der 3D Punktwolke eingefügt (3D/2D Fusion). Dazu kann das aufgezeichnete Video (Image Stream 1..n) verwendet werden, indem durch Verwendung des ersten und zweiten Algorithmus (Tracking Thread 3D, Tracking Thread 2D) und durch Abgleich mit dem jeweiligen zuvor generierten Modell gleichzeitig sowohl die 3D Punktwolke wie auch 2D Bilder erkannt werden und dadurch räumlich zugeordnet werden können.

Im Modul 3 werden in einem grafischen Editor darzustellende Inhalte (3D Content) für eine Augmented Reality Anwendung aufbereitet. Diese Inhalte werden in das zuvor konstruierte 3D Modell, das durch 2D Bilder erweitert wurde, eingefügt und dadurch wird ihre Position und Orientierung im Raum bestimmt. Das um 3D Content erweiterte Modell umfasst dabei vorzugsweise folgende Datengruppen: 2D Logos, 3D Untermodelle (Reference Sub-Maps) und die Zuordnung (2D/3D Fusion Map) der 3D Position der 2D Logos innerhalb der 3D Untermodelle, wobei die Fusion Map als Zuordnungsmatrix ausgebildet sein kann. Zusammen bilden die Datengruppen das Global Map Information Package.

Das Modul 4 nutzt das zuvor erstellte Gesamtmodell (Global Map Information Package) mitsamt eingetragener Inhalte. Dieses Informationspaket wird nun auf ein mobiles Endgerät transferiert, auf dem zum Zwecke der Positionsbestimmung des Benutzers der hybride Trackingalgorithmus läuft. Der erste Algorithmus nutzt die im Paket gespeicherten Unterkarten zur Ortung des Benutzers, der zweite Algorithmus verwendet die im Global Map Information Package enthaltenen 2D Bilder zur robusten Positionsbestimmung. Die Position und Orientierung kann mittels Inertialsensoren des Endgeräts geschätzt werden (Fallback heuristic), falls kurzfristig keine Kameradaten am Endgerät zur Verfügung stehen. Sobald Position und Orientierung ermittelt wurden, können die im Paket enthaltenen Augmented Reality Inhalte an korrekter Position im Display des Endgeräts angezeigt werden. Eine sehr genaue Indoor Navigationslösung ist dadurch realisierbar.

Fig. 2 zeigt eine Punktwolke wie sie durch den ersten Algorithmus zur Feature Extraktion erzeugt wurde.

Fig. 3 zeigt einen Anwendungsfall der Erfindung beim Tracking mit einer Augmented Reality Funktion. Mit der Kamera eines mobilen Endgeräts (Smartphone) wird die Umgebung eines Innenraums (z.B. Flughafen) aufgenommen und auf dem Display des Geräts angezeigt. Sobald die Anwendung die Position und Orientierung (Gier-, Nick- und Roll-Winkel) des Geräts innerhalb des 3D Modells erkannt hat, werden je nach Anwendungsfall Zusatzinformationen auf das Display gebracht und in das Live-Bild der Kamera eingeblendet. Im vorliegenden Ausführungsbeispiel handelt es sich um eine Navigationsfunktion, bei der die Zusatzinformationen Navigationspfeile zu einem gewünschten Ziel sind.

Fig. 4 zeigt dieselbe Displayansicht wie Fig. 3, wobei zur besseren Illustration die von dem ersten und/oder zweiten Algorithmus zur Feature Extraktion im Rahmen der Eckpunk- bzw. Kantendetektion erkannten Bildmerkmale markiert sind.

## Patentansprüche

1. Verfahren zur Positionsbestimmung eines Benutzers in einer realen Umgebung mittels eines vom Benutzer getragenen mobilen Endgeräts unter Verwendung eines gespeicherten virtuellen Modells der Umgebung, wobei das gespeicherte Modell ein dreidimensionales Modell der Umgebung und wenigstens ein zweidimensionales Modell eines Teilbereichs der Umgebung umfasst, dem eine 3D-Position innerhalb des dreidimensionalen Modells der Umgebung zugeordnet ist, wobei mit einem optischen Sensor des Endgeräts ein Bereich der realen Umgebung aufgenommen wird, um wenigstens eine zweidimensionale Abbildung des Bereichs zu erhalten, wobei die wenigstens eine zweidimensionale Abbildung einer elektronischen Bildverarbeitung im Endgerät unterworfen wird, welche einen ersten Algorithmus zur Feature Extraktion und einen zweiten Algorithmus zur Feature Extraktion umfasst, wobei der erste Algorithmus zur Feature Extraktion durchgeführt wird, um ein dreidimensionales virtuelles Modell des Bereichs zu erhalten, und der zweite Algorithmus zur Feature Extraktion durchgeführt wird, um ein zweidimensionales virtuelles Modell des Bereichs zu erhalten, wobei das dreidimensionale virtuelle Modell mit dem gespeicherten dreidimensionalen Modell verglichen und das zweidimensionale virtuelle Modell mit dem gespeicherten zweidimensionalen Modell verglichen wird und bei Erkennen einer Übereinstimmung die Position des Benutzers innerhalb des gespeicherten dreidimensionalen Modells erhalten wird, wobei die Auflösung der Feature Extraktion des ersten Algorithmus geringer ist als die des zweiten Algorithmus.

2. Verfahren nach Anspruch 1, **dadurch gekennzeichnet, dass** das Aufnehmen des Bereichs der realen Umgebung durchgeführt wird, um wenigstens eine Videosequenz zu erhalten, wobei jedes der aufeinanderfolgenden Einzelbilder der Videosequenz hintereinander einer Bildverarbeitung mittels des ersten Algorithmus und einer Bildverarbeitung mittels des zweiten Algorithmus unterworfen wird.

3. Verfahren nach Anspruch 1 oder 2, **dadurch gekennzeichnet, dass** der erste und/oder zweite Algorithmus durchgeführt wird, um eine Punktwolke zu erhalten.

4. Verfahren nach einem der Ansprüche 1 bis 3, **dadurch gekennzeichnet, dass** der erste und/oder der zweite Algorithmus zur Feature Extraktion eine Eckpunktdetektion und/oder Kantendetektion umfasst.

5. Verfahren nach einem der Ansprüche 1 bis 4, **dadurch gekennzeichnet, dass** der aufgenommene Bereich der realen Umgebung auf einer elektronischen Anzeigeeinheit des Endgeräts in Echtzeit angezeigt wird und in Abhängigkeit von der ermittelten Position des Benutzers wenigstens ein virtuelles Objekt in die Anzeige der realen Umgebung eingeblendet wird.

6. Vorrichtung zur Positionsbestimmung eines Benutzers in einer realen Umgebung, zur Durchführung eines Verfahrens nach einem der Ansprüche 1 bis 5, umfassend ein vom Benutzer tragbares mobiles Endgerät mit einem optischen Sensor zur Erzeugung einer zweidimensionalen Abbildung eines Bereichs der realen Umgebung, mit einem Datenspeicher zum Speichern eines virtuellen Modells der Umgebung, wobei das gespeicherte Modell ein dreidimensionales Modell der Umgebung und wenigstens ein zweidimensionales Modell eines Teilbereichs der Umgebung umfasst, dem eine 3D-Position innerhalb des dreidimensionalen Modells der Umgebung zugeordnet ist, und mit einem Datenverarbeitungssystem, wobei in dem Datenverarbeitungssystem ein Verfahren implementiert ist, das geeignet ist, um die wenigstens eine zweidimensionale Abbildung einer elektronischen Bildverarbeitung zu unterwerfen, welche einen ersten Algorithmus zur Feature Extraktion umfasst, um ein dreidimensionales virtuelles Modell des Bereichs zu erhalten, und einen zweiten Algorithmus zur Feature Extraktion umfasst, um ein zweidimensionales virtuelles Modell des Bereichs zu erhalten, um das zweidimensionale virtuelle Modell mit dem gespeicherten zweidimensionalen Modell zu vergleichen und das dreidimensionale virtuelle Modell mit dem gespeicherten dreidimensionalen Modell zu vergleichen und um bei Erkennen einer Übereinstimmung die Position des Benutzers innerhalb des gespeicherten dreidimensionalen Modells zu erhalten, wobei die Auflösung der Feature Extraktion des ersten Algorithmus geringer ist als die des zweiten Algorithmus.

7. Vorrichtung nach Anspruch 6, **dadurch gekennzeichnet, dass** das Aufnehmen des Bereichs der realen Umgebung durchgeführt wird, um wenigstens eine Videosequenz zu erhalten, wobei das Datenverarbeitungssystem eingerichtet ist, um aufeinanderfolgende Einzelbilder der Videosequenz abwechselnd einer Bildverarbeitung mittels des ersten Algorithmus und einer Bildverarbeitung mittels des zweiten Algorithmus zu unterwerfen.

8. Vorrichtung nach Anspruch 6 oder 7, **dadurch gekennzeichnet, dass** das Datenverarbeitungssystem eingerichtet ist, den ersten und/oder zweiten Algorithmus durchzuführen, um eine Punktwolke zu erhalten.

9. Vorrichtung nach einem der Ansprüche 6 bis 8, **dadurch gekennzeichnet, dass** der erste und/oder der zweite Algorithmus zur Feature Extraktion eine Eckpunktdetektion und/oder eine Kantendetektion umfasst.

10. Vorrichtung nach einem der Ansprüche 6 bis 9, **dadurch gekennzeichnet, dass** eine mit dem Datenverarbeitungssystem verbundene elektronische Anzeigeeinheit vorgesehen ist, die mit dem Datenverarbeitungssystem zusammenwirkt, um den vom optischen Sensor aufgenommenen Bereich der realen Umgebung auf der elektronischen Anzeigeeinheit in Echtzeit anzuzeigen und in Abhängigkeit von der ermittelten Position des Benutzers wenigstens ein virtuelles Objekt in die Anzeige der realen Umgebung einzublenden.

11. Computerprogrammprodukt, welches Softwarecodeabschnitte aufweist, welche in einem Verfahren nach einem der Ansprüche 1 bis 5 geeignet ist, um die wenigstens eine zweidimensionale Abbildung einer elektronischen Bildverarbeitung im Endgerät zu unterwerfen, welche einen ersten Algorithmus zur Feature Extraktion umfasst, um ein dreidimensionales virtuelles Modell des Bereichs zu erhalten, und einen zweiten Algorithmus zur Feature Extraktion umfasst, um ein zweidimensionales virtuelles Modell des aufgenommenen Bereichs zu erhalten, um das zweidimensionale virtuelle Modell mit dem gespeicherten zweidimensionalen Modell zu vergleichen und das dreidimensionale virtuelle Modell mit dem gespeicherten dreidimensionalen Modell zu vergleichen und um bei Erkennen einer Übereinstimmung die Position des Benutzers innerhalb des gespeicherten dreidimensionalen Modells zu erhalten, wobei die Auflösung der Feature Extraktion des ersten Algorithmus geringer ist als die des zweiten Algorithmus.

## Claims

1. Method for determining the position of a user in a real environment by means of a mobile terminal carried by the user using a stored virtual model of the environment, the stored model comprising a three-dimensional model of the environment and at least one two-dimensional model of a sub-area of the environment, to which a 3D position is assigned within the three-dimensional model of the environment, wherein an area of the real environment is recorded with an optical sensor of the terminal in order to obtain at least one two-dimensional image of the area, wherein the at least one two-dimensional image is subjected to electronic image processing in the terminal, which comprises one first algorithm for feature extraction and a second algorithm for feature extraction, wherein the first algorithm for feature extraction is carried out to obtain a three-dimensional virtual model of the area, and the second algorithm for feature extraction is carried out in order to obtain a two-dimensional virtual model of the area, wherein the three-dimensional virtual model is compared with the stored three-dimensional model and the two-dimensional virtual model is compared with the stored two-dimensional model and, if a match is detected, the position of the user is obtained within the stored three-dimensional model, wherein the resolution of the feature extraction of the first algorithm is lower than that of the second algorithm.

2. Method according to claim 1, **characterized in that** the area of the real environment is recorded in order to obtain at least one video sequence, each of the successive individual images of the video sequence being subjected to image processing using the first algorithm and image processing using the second algorithm.

3. Method according to claim 1 or 2, **characterized in that** the first and/or second algorithm is carried out in order to obtain a point cloud.

4. Method according to any one of claims 1 to 3, **characterized in that** the first and/or the second algorithm for feature extraction comprises corner point detection and/or edge detection.

5. Method according to any one of claims 1 to 4, **characterized in that** the recorded area of the real environment is displayed in real time on an electronic display unit of the terminal and, depending on the determined position of the user, at least one virtual object is displayed in the display of the real environment

6. Device for determining the position of a user in a real environment, for performing a method according to any one of claims 1 to 5, comprising a mobile terminal portable by the user with an optical sensor for generating a two-dimensional image of an area of the real environment, with a data memory for storing a virtual model of the environment, wherein the stored model comprises a three-dimensional model of the environment and at least one two-dimensional model of a sub-area of the environment to which a 3D position within the three-dimensional model of the environment is assigned, and with a data processing system, wherein a method is implemented in the data processing system, which is suitable for subjecting the at least one two-dimensional image to electronic image processing, which comprises a first algorithm for feature extraction in order to obtain a three-dimensional virtual model of the area and a second algorithm for feature extraction to obtain a two-dimensional virtual model of the area, to compare the two-dimensional virtual model with the stored two-dimensional model and to compare the three-dimensional virtual model with the stored three-dimensional model and, if a match is detected, to obtain the position of the user within the stored three-dimensional model, wherein the resolution of the feature extraction of the first algorithm is lower than that of the second algorithm.

7. Device according to claim 6, **characterized in that** the recording of the area of the real environment is carried out in order to obtain at least one video sequence, the data processing system being set up to alternately subject consecutive individual images of the video sequence to image processing using the first algorithm and image processing using the second algorithm.

8. Device according to claim 6 or 7, **characterized in that** the data processing system is set up to carry out the first and/or second algorithm in order to obtain a point cloud.

9. Device according to any one of claims 6 to 8, **characterized in that** the first and/or the second algorithm for feature extraction comprises corner point detection and/or edge detection.

10. Device according to any one of claims 6 to 9, **characterized in that** an electronic display unit connected to the data processing system is provided, which interacts with the data processing system in order to display the area of the real environment recorded by the optical sensor on the electronic display unit in real time and as a function of the determined position of the user to show at least one virtual object in the display of the real environment.

11. Computer program product which has software code sections which are suitable in a method according to any one of claims 1 to 5 to subject the at least one two-dimensional image to electronic image processing in the terminal, which comprises a first algorithm for feature extraction to obtain a three-dimensional virtual model of the area and a second algorithm for feature extraction to obtain a two-dimensional virtual model of the captured area, to compare the two-dimensional virtual model with the stored two-dimensional model and to compare the three-dimensional virtual model with the stored three-dimensional model and, if a match is detected, to obtain the position of the user within the stored three-dimensional model, wherein the resolution of the feature extraction of the first algorithm is lower than that of the second algorithm.

## Revendications

1. Procédé de détermination de position d'un utilisateur dans un environnement réel au moyen d'un appareil terminal mobile porté par l'utilisateur en utilisant un modèle virtuel mémorisé de l'environnement, dans lequel
le modèle mémorisé comprend un modèle tridimensionnel de l'environnement et au moins un modèle bidimensionnel d'une zone partielle de l'environnement à laquelle est attribuée une position 3D au sein du modèle tridimensionnel de l'environnement, dans lequel avec un capteur optique de l'appareil terminal, une zone de l'environnement réel est enregistrée pour obtenir au moins une représentation bidimensionnelle de la zone, dans lequel l'au moins une représentation bidimensionnelle est soumise à un traitement d'image électronique dans l'appareil terminal, qui comprend un premier algorithme pour l'extraction de caractéristiques et un second algorithme pour l'extraction de caractéristiques, dans lequel le premier algorithme pour l'extraction de caractéristiques est exécuté pour obtenir un modèle virtuel tridimensionnel de la zone, et le second algorithme pour l'extraction de caractéristiques est exécuté pour obtenir un modèle virtuel bidimensionnel de la zone, dans lequel le modèle virtuel tridimensionnel est comparé au modèle tridimensionnel mémorisé et le modèle virtuel bidimensionnel est comparé au modèle bidimensionnel mémorisé et en cas d'identification d'une concordance, la position de l'utilisateur est obtenue au sein du modèle tridimensionnel mémorisé, dans lequel la résolution de l'extraction de caractéristiques du premier algorithme est plus faible que celle du second algorithme.

2. Procédé selon la revendication 1, **caractérisé en ce que** l'enregistrement de la zone de l'environnement réel est réalisé pour obtenir au moins une séquence vidéo, dans lequel chacune des images individuelles consécutives de la séquence vidéo est soumise successivement à un traitement d'image au moyen du premier algorithme et à un traitement d'image au moyen du second algorithme.

3. Procédé selon la revendication 1 ou 2, **caractérisé en ce que** le premier et/ou le second algorithme sont exécutés pour obtenir un nuage de points.

4. Procédé selon l'une quelconque des revendications 1 à 3, **caractérisé en ce que** le premier et/ou le second algorithme pour l'extraction de caractéristiques comprennent une détection de sommet et/ou une détection de contours.

5. Procédé selon l'une quelconque des revendications 1 à 4, **caractérisé en ce que** la zone enregistrée de l'environnement réel est affichée en temps réel sur une unité d'affichage électronique de l'appareil terminal et en fonction de la position déterminée de l'utilisateur, au moins un objet virtuel est superposé dans l'affichage de l'environnement réel.

6. Dispositif de détermination de position d'un utilisateur dans un environnement réel pour la réalisation d'un procédé selon l'une quelconque des revendications 1 à 5, comprenant un appareil terminal mobile portable par l'utilisateur avec un capteur optique pour générer une représentation bidimensionnelle d'une zone de l'environnement réel, avec une mémoire de données pour mémoriser un modèle virtuel de l'environnement, dans lequel le modèle mémorisé comprend un modèle tridimensionnel de l'environnement et au moins un modèle bidimensionnel d'une zone partielle de l'environnement à laquelle est attribuée une position 3D au sein du modèle tridimensionnel de l'environnement, et avec un système de traitement de données, dans lequel dans le système de traitement de données un procédé qui est approprié pour soumettre l'au moins une représentation bidimensionnelle à un traitement d'image électronique est implémenté, lequel comprend un premier algorithme pour l'extraction de caractéristiques pour obtenir un modèle virtuel tridimensionnel de la zone, et comprend un second algorithme pour l'extraction de caractéristiques pour obtenir un modèle virtuel bidimensionnel de la zone, pour comparer le modèle virtuel bidimensionnel au modèle bidimensionnel mémorisé et comparer le modèle virtuel tridimensionnel au modèle tridimensionnel mémorisé et pour obtenir en cas d'identification d'une concordance la position de l'utilisateur au sein du modèle tridimensionnel mémorisé, dans lequel la résolution de l'extraction de caractéristiques du premier algorithme est plus faible que celle du second algorithme.

7. Dispositif selon la revendication 6, **caractérisé en ce que** l'enregistrement de la zone de l'environnement réel est réalisé pour obtenir au moins une séquence vidéo, dans lequel le système de traitement de données est configuré pour soumettre des images individuelles consécutives de la séquence vidéo alternativement à un traitement d'image au moyen du premier algorithme et à un traitement d'image au moyen du second algorithme.

8. Dispositif selon la revendication 6 ou 7, **caractérisé en ce que** le système de traitement de données est configuré pour exécuter le premier et/ou le second algorithme pour obtenir un nuage de points.

9. Dispositif selon l'une quelconque des revendications 6 à 8, **caractérisé en ce que** le premier et/ou le second algorithme pour l'extraction de caractéristiques comprennent une détection de sommet et/ou une détection de contours.

10. Dispositif selon l'une quelconque des revendications 6 à 9, **caractérisé en ce qu'**est prévue une unité d'affichage électronique reliée au système de traitement de données, qui coopère avec le système de traitement de données pour afficher en temps réel la zone enregistrée de l'environnement réel par le capteur optique sur l'unité d'affichage électronique et superposer en fonction de la position déterminée de l'utilisateur au moins un objet virtuel dans l'affichage de l'environnement réel.

11. Produit de programme informatique qui présente des segments de code de logiciel qui sont appropriés dans un procédé selon l'une quelconque des revendications 1 à 5, pour soumettre l'au moins une représentation bidimensionnelle à un traitement d'image électronique dans l'appareil terminal, qui comprend un premier algorithme pour l'extraction de caractéristiques, pour obtenir un modèle virtuel tridimensionnel de la zone, et un second algorithme pour l'extraction de caractéristiques pour obtenir un modèle virtuel bidimensionnel de la zone enregistrée, pour comparer le modèle virtuel bidimensionnel au modèle bidimensionnel mémorisé et le modèle virtuel tridimensionnel au modèle tridimensionnel mémorisé et en cas d'identification d'une concordance pour obtenir la position de l'utilisateur au sein du modèle tridimensionnel mémorisé, dans lequel la résolution de l'extraction de caractéristiques du premier algorithme est plus faible que celle du second algorithme.
